# EUROPÄISCHE PATENTANMELDUNG

(11) **EP 0 993 171 A2**
(43) Veröffentlichungstag der Anmeldung: **12.04.2000**
(21) Anmeldenummer: 99103151.9
(22) Anmeldetag: 18.02.1999
(51) Int. Cl.: H04M 11/02, H02G 3/12, H05K 5/00, H04M 1/02

(54) **Aufnahmegehäuse einer Türstation einer Türsprechanlage**

(30) Priorität: 11.04.1998 DE 19816390
(71) Anmelder: Ritto - Werk Loh GmbH & Co. KG, 35708 Haiger (DE)
(72) Erfinder: Achenbach, Heinz, 35236 Breidenbach (DE)
(74) Vertreter: Fleck, Hermann-Josef, Dr.-Ing.

(57) **Zusammenfassung**

Die Erfindung betrifft eine Türstation einer Türsprechanlage mit einem Aufnahmegehäuse für Moduleinheiten, bei der das Aufnahmegehäuse zeilen-, spalten- oder rasterförmig angeordnete Modulaufnahmen bildet, in die Moduleinheiten bündig mit der Sichtseite des Aufnahmegehäuses einsetzbar und darin festlegbar sind. Der Gehäuseaufbau wird mit wesentlich kleinerer Bauhöhe dadurch vereinfacht, daß das Aufnahmegehäuse eine Trägerplatte (10) aufweist, die sich mindestens über eine Zeile oder Spalte von Modulaufnahmen (A1, A2, A3) erstreckt und zumindest an den in Zeilen- oder Spaltenrichtung verlaufenden Seiten über die Modulaufnahmen (A1, A2, A3) hinausragt, daß an diesen Seiten der Trägerplatte (10) Rahmenteile (50) anbringbar sind, die sich über alle Modulaufnahmen (A1, A2, A3) der Zeile oder Spalte erstrecken und in ihrer Abmessung auf die Bautiefe der in die Modulaufnahmen (A1, A2, A3) einsetzbaren Moduleinheiten (ME, ME1, ME2, ME3) abgestimmt sind, daß die Rahmenteile (50) an den Schmalseiten der Zeile oder Spalte mit Abschlußteilen (60) zu einem Rahmen ergänzt sind und daß die Moduleinheiten (ME, ME1, ME2, ME3) direkt an Haltestegen (11) der Trägerplatte (10) festlegbar sind, die in den Modulaufnahmen (A1, A2, A3) zugänglich sind.

## Beschreibung

Die Erfindung betrifft eine Türstation einer Türsprechanlage mit einem Aufnahmegehäuse für Moduleinheiten, bei der das Aufnahmegehäuse zeilen-, spalten- oder rasterförmig angeordnete Modulaufnahmen bildet, in die Moduleinheiten bündig mit der Sichtseite des Aufnahmegehäuses einsetzbar und darin festlegbar sind.

Eine derartige Türstation ist aus der DE 40 09 190 C1 bekannt. Bei diesem Aufbau der Türstation ist ein Basisgehäuse, das in Aufputz- oder Unterputzausführung gestaltet sein kann, pro Modulaufnahme mit einer Modul-Anschlußbuchse versehen, so daß das Basisgehäuse mit den im Gebäude verlegten AnSchlußkabeln vorverdrahtet werden kann. Bei der Inbetriebnahme der Anlage werden die mit entsprechenden Modul-Anschlußsteckern versehenen Moduleinheiten unter Herstellung der elektrischen Verbindungen nur noch in die Modulaufnahmen eingesetzt und darin festgelegt. Die Moduleinheiten sind dabei aus einer Funktionseinheit und einem Zwischengehäuse zusammengesetzt und das Basisgehäuse ist im Bereich der Sichtseite mit einem Abschlußrahmen versehen, der die eingesetzten Moduleinheiten bündig umschließt.

Diese bekannte Türstation hat insbesondere in der Aufputzausführung durch das Basisgehäuse und die zusammengesetzten Moduleinheiten bedingt eine große Bauhöhe. Außerdem ist der konstruktive Aufbau vom Teile- und Montageaufwand betrachtet sehr aufwendig.

Es ist Aufgabe der Erfindung, eine Türstation der eingangs erwähnten Art im Teile- und Montageaufwand wesentlich zu vereinfachen und insbesondere eine Aufputzausführung zu schaffen, die eine wesentlich kleinere Bauhöhe aufweist.

Diese Aufgabe wird nach der Erfindung dadurch gelöst, daß das Aufnahmegehäuse eine Trägerplatte aufweist, die sich mindestens über eine Zeile oder Spalte von Modulaufnahmen erstreckt und zumindest an den in Zeilen- oder Spaltenrichtung verlaufenden Seiten über die Modulaufnahmen hinausragt, daß an diesen Seiten der Trägerplatte Rahmenteile anbringbar sind, die sich über alle Modulaufnahmen der Zeile oder Spalte erstrecken und in ihrer Abmessung auf die Bautiefe der in die Modulaufnahmen einsetzbaren Moduleinheiten abgestimmt sind, daß die Rahmenteile an den Schmalseiten der Zeile oder Spalte mit Abschlußteilen zu einem Rahmen ergänzt sind und daß die Moduleinheiten direkt an Haltestegen der Trägerplatte festlegbar sind, die in den Modulaufnahmen zugänglich sind.

Anstelle des Basisgehäuses tritt nur noch eine Trägerplatte, die schon mit den Rahmenteilen und den Abschlußteilen das Aufnahmegehäuse bildet. Mit den Haltestegen der Trägerplatte können die Moduleinheiten direkt an der Trägerplane festgelegt werden, so daß Zwischengehäuse für die Moduleinheiten nicht mehr erforderlich sind. Die Moduleinheiten können neben der Festlegung an der Trägerplatte auch den elektrischen Anschluß übernehmen. Im wesentlichen wird die Bauhöhe, die gegenüber der Befestigungsfläche gegeben ist, allein durch die Bauhöhe der Moduleinheiten bestimmt, die mit den heutzutage zur Verfügung stehenden elektronischen und elektrischen Bauteilen sehr klein gehalten werden kann.

Ist nach einer Ausgestaltung vorgesehen, daß die Rahmenteile zur Trägerplatte hin offen sind und zwei Schenkel mit Raststegen auslaufen, die in Aufnahmenuten von zwei an der Trägerplatte beidseitig angeformten Verbindungsstegen einrastbar sind, dann wird damit nicht nur eine einfache Verbindung zwischen den Rahmenteilen und der Trägerplatte geschaffen, es wird zudem ein Raum gebildet, in dem die Verdrahtung der Türstation untergebracht werden kann.

Für die Festlegung der Moduleinheiten in den Modulaufnahmen ist nach einer Ausgestaltung vorgesehen, daß die den Modulaufnahmen zugekehrten inneren Verbindungsstege gleichzeitig als Haltestege zum Festlegen der Moduleinheiten verwendet sind und zumindest teilweise in den Bereich der Modulaufnahmen ragen. Dabei ist die Ausgestaltung so, daß die inneren Verbindungsstege auf den einander zugekehrten Seiten mit Aufnahmenuten für Verbindungselemente der Moduleinheiten versehen sind, und daß die Aufnahmenuten pro Modulaufnahme mit einer Einführausnehmung für das Verbindungselement der Moduleinheit versehen sind. Die Moduleinheit kann mit den Verbindungselementen über die Einführausnehmungen in die Modulaufnahme eingesetzt werden. Die Verbindungselemente lassen sich nach dem Einführen in die Aufnahmenut hinein verschieben, so daß die Moduleinheit in der Modulaufnahme gehalten ist.

Ein flexibler Aufbau der Türstation wird dadurch erreicht, daß die Modulaufnahmen und die Moduleinheiten quadratische Innen- und Außenkontur aufweisen und daß die Moduleinheiten in zwei um 90° verdrehten Stellungen in eine Modulaufnahme einsetzbar und darin festlegbar sind. Eine vertikal ausgelegte Moduleinheit kann dann in ein Aufnahmegehäuse eingesetzt werden, das wahlweise als horizontale Zeile oder vertikale Spalte von Modulaufnahmen verfügt.

Die Anbringung der Abschlußteile an den Schmalseiten des Aufnahmegehäuses ist in einfacher Art so gelöst, daß an den den Modulaufnahmen abgekehrten äußeren Verbindungsstegen durchgehende, offene Schraubhülsen angeformt sind, in die die zur Befestigung der Abschlußteile verwendeten Befestigungsschrauben einschraubbar sind.

Für den elektrischen Anschluß der Moduleinheiten ist vorgesehen, daß auf einer Seite der Trägerplatte der als Haltesteg dienende innere Verbindungssteg pro Modulaufnahme eine Ausnehmung aufweist, durch die eine Modulanschlußplatine in die Modulaufnahme einführbar ist, und daß auf dieser Seite der Trägerplatte zwischen innerem und äußerem Verbindungssteg ein zusätzlicher Aufnahmesteg mit einer Einstecknut für die Modulanschlußplatinen an der Trägerplatte angeformt ist. Die Positionierung der Modulanschlußplatinen wird so mit einer einzigen Schraube erreicht, wenn vorgesehen ist, daß die Modulanschlußplatinen auf Schraubhülsen abgestützt und mit diesen verschraubt sind, die im Bereich der Modulaufnahmen an der Trägerplatte angeformt sind.

Das Einführen und Festlegen der Moduleinheiten wird dadurch erleichtert, daß die Verbindungselemente der Moduleinheiten Teil eines elastischen Schließelementes ist, das in der Moduleinheit umfangsseitig begrenzt verstellbar gehalten ist und an allen vier Seiten mit einem Verbindungselement versehen ist.

Die elektrische Verbindung ist nach einer Ausgestaltung so gelöst, daß die Modulanschlußplatinen im Bereich der Modulaufnahmen mit einer Modul-Anschlußbuchse versehen sind, daß die Moduleinheiten auf zwei benachbarten Seiten mit Modul-Anschlußsteckern versehen sind, daß die Modulanschlußplatinen im Bereich der Rahmenteile zwei Bus-Verbindungsbuchsen tragen, die mit der Modul-Anschlußbuchse parallel geschaltet sind, daß die Modulanschlußplatinen über Bus-Verbinder verbindbar sind, die an beiden Enden mit einem Bus-Verbindungsstecker abgeschlossen sind, und daß die Bus-Verbinder auf den Abstand der Modulanschlußplatinen abgestimmt sind.

Die Türstation läßt sich dadurch erweitern, daß sich die Trägerplatte über mehrere Zeilen und/oder Spalten von Modulaufnahmen erstreckt oder aus mehreren einzelnen Trägerplatten zusammengesetzt ist, und daß die Rahmen- und Abschlußteile die Modulaufnahmen gitterartig umschließen.

Die Erfindung wird anhand eines in den Zeichnungen dargestellten Ausführungsbeispiels näher erläutert. Es zeigen:
- Fig. 1: einen schematischen Querschnitt durch das Aufnahmegehäuse im Bereich einer Modulaufnahme mit den Gehäuseteilen in Explosionsdarstellung,
- Fig. 2: im Querschnitt und in Draufsicht die Trägerplatte des Aufnahmegehäuses und
- Fig. 3: in perspektivischer Draufsicht eine Türstation mit einer Spalte von drei Moduleinheiten und dem dafür erforderlichen Bus-Verbindungssystem.

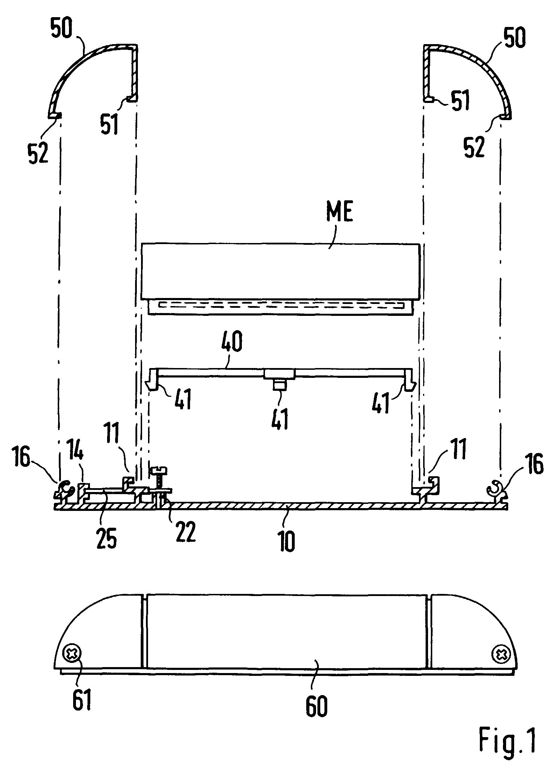

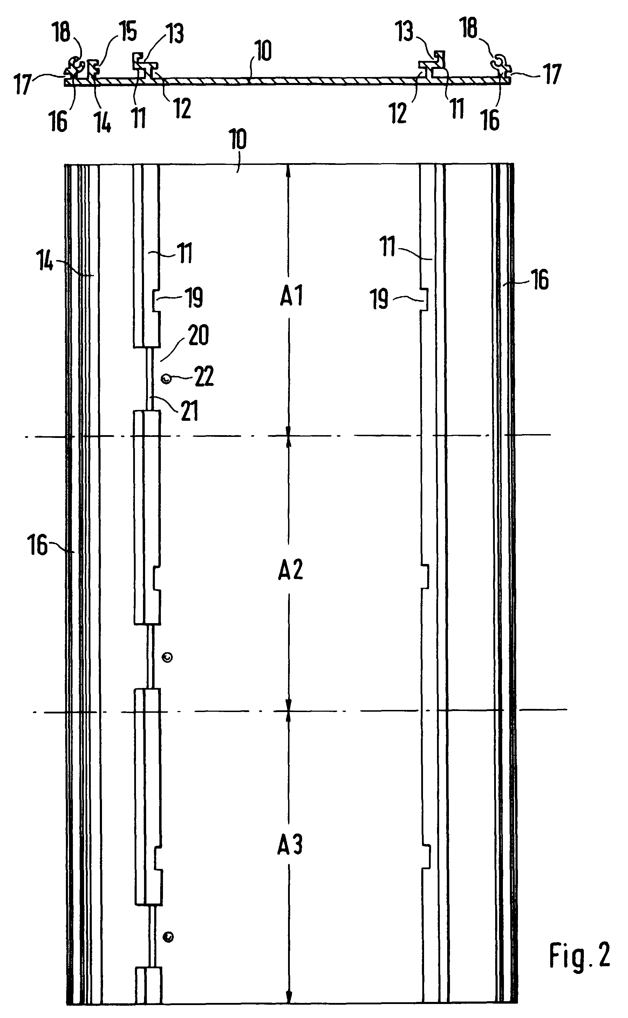

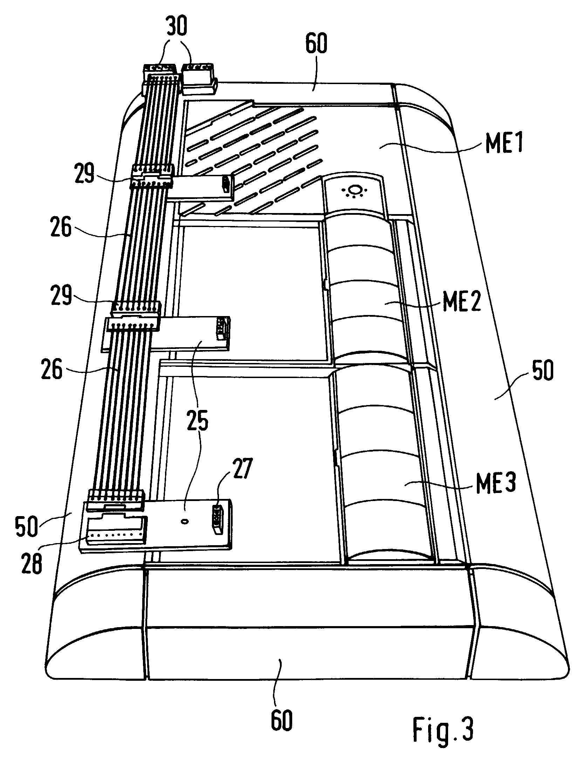

Fig. 1 läßt den Aufbau der erfindungsgemäßen Türstation schematisch erkennen. Ein wesentliches Gehäuseteil ist eine Trägerplatte 10, die mit einer Befestigungsfläche verbunden werden kann. Die Erfindung wird anhand einer Türstation mit drei vertikal angeordneten Moduleinheiten ME1, ME2, ME3, wie der Fig. 3 zu entnehmen ist, näher erläutert. Die Trägerplatte 10 erstreckt sich zumindest über die drei Modulaufnahmen A1, A2 und A3, wobei die quadratischen Modulaufnahmen durch als Haltestege ausgebildete Verbindungsstege 11 begrenzt werden. Diese Verbindungsstege 11 sind an der Trägerplatte 10 angeformt und bilden einander zugekehrt Aufnahmenuten 12, wie Fig. 2 deutlch erkennen läßt. Die Moduleinheiten ME weisen ein Schließelement 40 auf, das sich über den Umfang der Moduleinheit ME erstreckt und auf jeder Seite ein Verbindungselement 41 trägt. Die Haltestege 11 tragen pro Modulaufnahme A1, A2 und A3 je eine Einführausnehmung 19 für die Verbindungselemente 41 des Schließelementes 40 der Moduleinheit ME, so daß diese voll einsetzbar ist. Das elastische Schließelement 40 ist in der Moduleinheit ME umfangsseitig begrenzt verstellbar, so daß die über die Einführausnehmungen 19 eingeführten Verbindungselemente 41 in die Aufnahmenuten 12 der Haltestege 11 eingeführt werden können. Sind die Verbindungselemente 41 als Rasthaken ausgebildet, dann können sie direkt in die Aufnahmenuten 12 der Haltestege 11 eingerastet werden und können über die Ausnehmungen 19 aus den Aufnahmenuten 12 herausgeführt werden.

Die Haltestege 11 dienen auch als Verbindungsstege für die die Modulaufnahmen A1, A2 und A3 begrenzenden Rahmenteile 50, die zur Trägerplatte 10 hin offen sind und in Schenkel mit Raststegen 51 und 52 auslaufen. Als Verbindungsstege 11 weist der Haltesteg eine zusätzliche Aufnahmenut 13 für den Raststeg 51 des Rahmenteils 50 auf. Die Trägerplatte 10 erstreckt sich zu beiden vertikalen Seiten über die Modulaufnahmen A1, A2 und A3 hinaus und trägt in diesen Bereichen einen weiteren Verbindungssteg 16 mit einer Aufnahmenut 17 für den Raststeg 52 des Rahmenteils 50, so daß dieses auf die beiden Verbindungsstege 11 und 16 aufgerastet werden kann. An den äußeren, den Modulaufnahmen A1, A2 und A3 abgekehrten Verbindungsstegen 16 sind offene Schraubhülsen 18 angeformt, so daß die an den Schmalseiten des Aufnahmegehäuses anzubringenden Abschlußteite 60 mit der Trägerplatte 10 verschraubt und die zugekehrten Modulaufnahmen A1 und A3 geschlossen werden können. Die beiden Rahmenteile 50 und zwei Abschlußteile 60 umschließen als geschlossener Rahmen die drei vertikal angeordneten Modulaufnahmen A1, A2 und A3. Dabei können die Abschlußteile 60 zur Befestigungsfläche hin offen sein oder durch überstehende Teile der Trägerplatte 10 abgedeckt sein.

Die Trägerplatte 10 kann auch horizontal ausgerichtet drei Moduleinheiten aufnehmen, die vorzugsweise dann mit quadratischer Außenkontur gestaltet sind und an allen Seiten mit Verbindungselementen 41 versehen sind. Die Moduleinheit ME1 kann dann in vertikaler Ausrichtung auch in die um 90° verdrehte Modulaufnahme A1 des Aufnahmegehäuses eingesetzt werden.

Wie Fig. 3 zeigt, sind die Rahmenteile 50 und die Abschlußteile 60 in ihrer Bauhöhe so auf die Bauhöhe der Moduleinheiten ME1, ME2 und ME3 abgestimmt, daß im Einbauzustand eine bündige Sichtseite entsteht, wobei die Rahmenteile 50 an ihren Außenkanten aus ästhetischen Gründen durchaus abgerundet sein können.

Auf einer Längsseite der Trägerplatte 10 ist zwischen dem inneren und dem äußeren Verbindungssteg 16 ein weiterer Aufnahmesteg 14 mit Aufnahmenut 15 angeformt, in die, wie Fig. 1 erkennen läßt, Modulanschlußplatinen 25 eingeschoben werden können. Diese Modulanschlußplatinen 25 sind pro Modulaufnahme A1, A2 und A3 vorgesehen und erstrecken sich durch Ausnehmungen 20 des inneren Verbindungssteges 11 teilweise in die zugeordnete Modulaufnahme A1, A2 und A3, wie der Fig. 1 zu entnehmen ist. Dabei ist im Bereich der Modulaufnahme A1, A2 und A3 eine Schraubhülse 22 angeformt, auf der sich die Modulanschlußplatine 25 im Abstand zur Trägerplatte 10 abstützt und mit der Schraubhüse 22 verschraubt werden kann. Im Bereich der Modulaufnahme A1, A2 und A3 trägt die Modulanschlußplatine 25 eine Modul-Anschlußbuchse 27 und zwischen den Verbindungsstegen 11 und 16 jeweils zwei Bus-Verbindungsbuchsen 28, wie das in Fig. 3 auf die Türstation aufgelegte Bus-Verbindungssystem zeigt. Die Modulanschlußplatinen 25 sind über Bus-Verbinder 26 in Form von Abschnitten eines mehradrigen Bandkabels miteinander verbunden, die an beiden Enden mit Bus-Verbindungssteckern 29 versehen sind. Die Bus-Verbinder 26 sind dabei auf den Abstand der auf der Trägerplatte 10 festgelegten Modulanschlußplatinen 25 abgestimmt. Im Bereich der Abschlußteile 60 endet das Bus-Verbindungssystem und erlaubt über eine weitere Modulanschlußplatine 25 über Kabel-Anschlußstecker die Anschaltung der im Gebäude verlegten Anschlußkabel. Auf jeder Modulanschlußplatine 25 sind die beiden Bus-Verbindungsbuchsen und die Modul-Anschlußbuchse 27 parallel geschaltet. Die Buchsen und Stecker können an allen Steckverbindungen auch vertauscht angeordnet sein.

Es bleibt noch zu erwähnen, daß die Moduleinheiten ME1, ME2 und ME3 in zwei benachbarten Seiten, d.h. der unteren und der linken Seite nach Fig. 3, mit je einem Modul-Anschlußstecker versehen sind, damit sie in der gleichen Richtung auch nebeneinander in das horizontal ausgerichtete Aufnahmegehäuse eingesetzt werden können.

Der erfindungsgemäße Aufbau des Aufnahmegehäuses läßt sich auch auf eine Türstation anwenden, die auf mehrere Zeilen und/oder Spalten von Modulaufnahmen erweitert ist. Dabei läßt sich eine einstückige, entsprechend große Trägerplatte verwenden und mit entsprechend verteilt angeformten Verbindungs- und Haltestegen auch ein gitterartiger Rahmenaufbau um die Moduleinheiten realisieren. Die Trägerplatte kann auch aus mehreren Teil-Trägerplatten zusammengesetzt werden.

## Patentansprüche

1. Türstation einer Türsprechanlage mit einem Aufnahmegehäuse für Moduleinheiten, bei der das Aufnahmegehäuse zeilen-, spalten- oder rasterförmig angeordnete Modulaufnahmen bildet, in die Moduleinheiten bündig mit der Sichtseite des Aufnahmegehäuses einsetzbar und darin festlegbar sind,
dadurch gekennzeichnet,
daß das Aufnahmegehäuse eine Trägerplatte (10) aufweist, die sich mindestens über eine Zeile oder Spalte von Modulaufnahmen (A1, A2, A3) erstreckt und zumindest an den in Zeilen- oder Spaltenrichtung verlaufenden Seiten über die Modulaufnahmen (A1, A2, A3) hinausragt,
daß an diesen Seiten der Trägerplatte (10) Rahmenteile (50) anbringbar sind, die sich über alle Modulaufnahmen (A1, A2, A3) der Zeile oder Spalte erstrecken und in ihrer Abmessung auf die Bautiefe der in die Modulaufnahmen (A1, A2, A3) einsetzbaren Moduleinheiten (ME, ME1, ME2, ME3) abgestimmt sind,
daß die Rahmenteile (50) an den Schmalseiten der Zeile oder Spalte mit Abschlußteilen (60) zu einem Rahmen ergänzt sind und
daß die Moduleinheiten (ME, ME1, ME2, ME3) direkt an Haltestegen (11) der Trägerplatte (10) festlegbar sind, die in den Modulaufnahmen (A1, A2, A3) zugänglich sind.

2. Türstation nach Anspruch 1,
dadurch gekennzeichnet,
daß die Rahmenteile (50) zur Trägerplatte (10) hin offen sind und zwei Schenkel mit Raststegen (51, 52) auslaufen, die in Aufnahmenuten (13, 17) von zwei an der Trägerplatte (10) beidseitig angeformten Verbindungsstegen (11, 16) einrastbar sind.

3. Türstation nach Anspruch 1 und 2,
dadurch gekennzeichnet,
daß die den Modulaufnahmen (A1, A2, A3) zugekehrten inneren Verbindungsstege (11) gleichzeitig als Haltestege (11) zum Festlegen der Moduleinheiten (ME, ME1, ME2, ME3) verwendet sind und zumindest teilweise in den Bereich der Modulaufnahmen (A1, A2, A3) ragen.

4. Türstation nach einem der Ansprüche 1 bis 3,
dadurch gekennzeichnet,
daß die inneren Verbindungsstege (11) auf den einander zugekehrten Seiten mit Aufnahmenuten (12) für Verbindungselemente (41) der Moduleinheiten (ME, ME1, ME2, ME3) versehen sind.

5. Türstation nach Anspruch 4,
dadurch gekennzeichnet,
daß die Aufnahmenuten (12) pro Modulaufnahme (A1, A2, A3) mit einer Einführausnehmung (19) für das Verbindungselement (41) der Moduleinheit (ME, ME1, ME2, ME3) versehen sind.

6. Türstation nach einem der Ansprüche 1 bis 5,
dadurch gekennzeichnet,
daß die Modulaufnahmen (A1, A2, A3) und die Moduleinheiten (ME, ME1, ME2, ME3) quadratische Innen- und Außenkontur aufweisen und
daß die Moduleinheiten (ME, ME1, ME2, ME3) in zwei um 90° verdrehten Stellungen in eine Modulaufnahme (A1, A2, A3) einsetzbar und darin festlegbar sind.

7. Türstation nach einem der Ansprüche 1 bis 6,
dadurch gekennzeichnet,
daß an den den Modulaufnahmen (A1, A2, A3) abgekehrten äußeren Verbindungsstegen (16) durchgehende, offene Schraubhülsen (18) angeformt sind, in die die zur Befestigung der Abschlußteile (60) verwendeten Befestigungsschrauben einschraubbar sind.

8. Türstation nach Anspruch 7,
dadurch gekennzeichnet,
daß auf einer Seite der Trägerplatte (10) der als Haltesteg dienende innere Verbindungssteg (11) pro Modulaufnahme (A1, A2, A3) eine Ausnehmung (20) aufweist, durch die eine Modulanschlußplatine (25) in die Modulaufnahme (Al, A2, A3) einführbar ist, und
daß auf dieser Seite der Trägerplatte (10) zwischen innerem und äußeren Verbindungssteg (11 und 16) ein zusätzlicher Aufnahmesteg (14) mit einer Einstecknut (15) für die Modulanschlußplatinen (25) an der Trägerplatte (10) angeformt ist.

9. Türstation nach Anspruch 8,
dadurch gekennzeichnet,
daß die Modulanschlußplatinen (25) auf Schraubhülsen (22) abgestützt und mit diesen verschraubt sind, die im Bereich der Modulaufnahmen (A1, A2, A3) an der Trägerplatte (10) angeformt sind.

10. Türstation nach einem der Ansprüche 4 bis 9,
dadurch gekennzeichnet,
daß die Verbindungselemente (51) der Moduleinheiten (ME, ME1, ME2, ME3) Teil eines elastischen Schließelementes (40) ist, das in der Moduleinheit (ME, ME1, ME2, ME3) umfangsseitig begrenzt verstellbar gehalten ist und an allen vier Seiten mit einem Verbindungselement (41) versehen ist.

11. Türstation nach einem der Ansprüche 1 bis 10,
dadurch gekennzeichnet,
daß die Modulanschlußplatinen (25) im Bereich der Modulaufnahmen (A1, A2, A3) mit einer Modul-Anschlußbuchse (27) versehen sind,
daß die Moduleinheiten (ME, ME1, ME2, ME3) auf zwei benachbarten Seiten mit Modul-Anschlußsteckern versehen sind,
daß die Modulanschlußplatinen (25) im Bereich der Rahmenteile (50) zwei Bus-Verbindungsbuchsen (28) tragen, die mit der Modul-Anschlußbuchse (27) parallel geschaltet sind,
daß die Modulanschlußplatinen (25) über Bus-Verbinder (26) verbindbar sind, die an beiden Enden mit einem Bus-Verbindungsstecker (29) abgeschlossen sind, und
daß die Bus-Verbinder (26) auf den Abstand der Modulanschlußplatinen (25) abgestimmt sind.

12. Türstation nach einem der Ansprüche 1 bis 11,
dadurch gekennzeichnet,
daß sich die Trägerplatte (10) über mehrere Zeilen und/oder Spalten von Modulaufnahmen (A1, A2, A3) erstreckt oder aus mehreren einzelnen Trägerplatten zusammengesetzt ist, und
daß die Rahmen- und Abschlußteile (50, 60) die Modulaufnahmen (A1, A2, A3) gitterartig umschließen.
